# EUROPÄISCHE PATENTSCHRIFT

(11) **EP 3 244 119 B1**
(45) Veröffentlichungstag und Bekanntmachung des Hinweises auf die Patenterteilung: **23.02.2022**
(21) Anmeldenummer: 17168347.7
(22) Anmeldetag: 27.04.2017
(51) Int. Cl.: F16L 59/20, F16L 25/14, B33Y 80/00

(54) **DICHTUNGSELEMENT**
SEAL ELEMENT
ÉLEMENT D'ETANCHEITE

(30) Priorität: 10.05.2016 DE 202016102481 U
(43) Veröffentlichungstag der Anmeldung: 15.11.2017
(73) Patentinhaber: REHAU AG + Co, 95111 Rehau (DE)
(72) Erfinder: Kirsch, Stefan, 91560 Heilsbronn (DE); Meyer, Michael, 85072 Eichstätt (DE)

(56) Entgegenhaltungen:
- DE-A1-102014 106 802
- DE-U1- 29 614 105
- DE-U1-202014 104 036
- US-B1- 6 394 505

## Beschreibung

Die vorliegende Erfindung betrifft ein Dichtungselement, mit dem ein Rohr in eine Umhüllung fluiddicht einführbar ist. Des Weiteren betrifft die vorliegende Erfindung ein Rohrsystem, das ein Rohr und eine Umhüllung umfasst, wobei das Rohr mit dem Dichtungselement fluiddicht in die Umhüllung eingeführt ist.

Bei thermisch gedämmten Rohren, wie beispielsweise bei Nahwärme- oder Fernwärmerohren, bei denen ein Medienrohr vorgesehen ist, durch das eine erwärmte Flüssigkeit strömt, um Wärmeenergie von einem Erzeuger einem Verbraucher zuzuleiten, besteht häufig die Aufgabe, bei einer Richtungsänderung einen Bogen vorzusehen, bei einem Verbraucher einen Abzweig oder ein Ventil zu installieren, ein Rohr anzuschließen oder weitere Installationsmaßnahmen vorzunehmen.

Solche Rohre weisen neben dem Medienrohr eine auf der Außenoberfläche des Medienrohrs angebrachte Wärmedämmschicht und eine auf der Außenseite der thermischen Isolationsschicht aufgebrachte Außenschicht auf.

Zur Anordnung eines Bogens, eines Abzweigs, eines Ventils oder dergleichen oder zur Verbindung zweier Rohre wird an der entsprechenden Stelle die Außenschicht und die Wärmedämmschicht abgetragen und das Medienrohr freigelegt. An der gewünschten Stelle wird ein Fitting eingebaut und das Medienrohr auf diese Weise fluiddicht verbunden.

In diesem Bereich ist anschließend die Wärmedämmung wieder herzustellen, indem eine Umhüllung angebracht wird, wobei die Umhüllung beispielsweise zweiteilig aus Schalen ausgeführt ist, die zueinander positioniert werden und dann verbunden werden und einen Innenraum bilden. Diese sind so angeordnet, dass sich der Fitting und die freigelegten Medienrohre in diesem Innenraum befinden. Der Innenraum kann anschließend mit einem Wärmedämmschaum ausgefüllt werden, wodurch die Wärmedämmung in diesem Abschnitt wieder hergestellt wird. Alternativ kann der Innenraum auch mit thermisch isolierenden Elementen, beispielsweise aus einem Polymerschaum, aufgefüllt werden.

Zur Einführung des Rohres in die Umhüllung wird ein Dichtungselement verwendet. An ein solches Dichtungselement sind hohe Anforderungen zu stellen.

Die Rohre weisen oft eine gewellte Oberfläche auf, hierzu sind an der Oberfläche der Rohre Einschnürungen ausgebildet. Auf diese Weise können die Rohre leicht in Bögen verlegt werden.

Im Bereich der Einführung des Rohrs in das Dichtungselement kann es aufgrund der Einschnürungen der Oberfläche des Rohrs leicht in unerwünschter Weise zu Spalten kommen, sodass beispielsweise Dichtschaum bei der Herstellung der Wärmedämmung aus dem Dichtungselement austritt.

Andererseits kann Wasser aus dem umgebenden Erdreich, in dem das Rohr verlegt ist, in unerwünschter Weise in die Umhüllung eindringen und die dortige Wärmedämmung vermindern oder sie ggf. außer Kraft setzen.

Da die Rohre bei der Lagerung und beim Transport auf Haspeln oder in Form von Ringbunden aufgewickelt sind, weisen diese oft eine Krümmung auf, sodass es nicht immer gelingt, ein solches Rohr senkrecht in die Stirnseite der Öffnung der Umhüllung bzw. senkrecht in die Stirnseite des Dichtungselements einzuführen.

Auch dabei kann es zu unerwünschten Spalten zwischen dem Rohr und dem Dichtungselement kommen, was ebenfalls zu den vorstehend geschilderten Problematiken führen kann.

Weiterhin gibt es auch Rohre, die eine gewisse Ovalität aufweisen, die produktionsbedingt oder auf Grund der Lagerung der Rohre im aufgerollten Zustand entstehen kann, wobei insbesondere über längere Zeiträume eine erhöhte Temperatur einwirken kann, wenn diese aufgerollten Rohre im Freien, dem Sonnenlicht ausgesetzt, gelagert werden.

Auch solche Rohre sollen durch ein Dichtungselement in sicherer Weise in eine Umhüllung einführbar sein, wobei die Fluiddichtheit gewährleistet sein soll.

Schließlich kann der Fall eintreten, dass sie Rohre innerhalb der Öffnung der Umhüllung in einem geringen Maß exzentrisch eingeführt sind, was insbesondere bei Abzweigen eintreten kann.

Aus der Druckschrift D1 (DE 20 2014 104 036 U1) geht eine Rohrverbindung mit einem ersten und einem zweiten Rohreingreifabschnitt hervor, die zur Verbindung von Rohren dient. Hierzu ist vorgesehen, dass ein erstes Rohr am ersten Rohreingreifabschnitt mittels einer an der Außenseite des Rohreingreifabschnittes vorgesehenen Klemmeinrichtung befestigt werden kann.

Die Druckschrift D2 (DE 296 14 105 U1) lehrt, eine Abdichtmanschette zur i. w. flüssigkeitsdichten Abdichtung des Ringraumes zwischen der Innenwand eines Mantelrohres und einer Außenwand eines in dem Mantelrohr angeordneten Produktrohres.

Die Druckschrift D3 (US 6 394 505 B1) zeigt ein Verbindungsteil in Form einer Dichtung zwischen dem Aufnahmeende einer Abwasserleitung und dem Auslassende einer Toilettenabflussleitung.

Hier setzt die Erfindung ein, deren Aufgabe es ist, ein verbessertes Dichtungselement anzugeben, das die vorstehend genannten Nachteile des Standes der Technik überwindet. Eine weitere Aufgabe der vorliegenden Erfindung ist es, ein Rohrsystem anzugeben, welches über ein solches Dichtungselement verfügt.

Die Lösung der ersten Aufgabe gelingt mit einem Dichtungselement mit den Merkmalen des Anspruchs 1.

Es wurde im Rahmen der vorliegenden Erfindung gefunden, dass ein Dichtungselement für die fluiddichte Einführung eines Rohres in eine Umhüllung, das einen Dichtungskörper aufweist mit einer Öffnung, und bei dem ein erster und ein zweiter Dichtungsabschnitt ausgebildet sind, wobei der erste Dichtungsabschnitt dafür vorgesehen ist, zum Rohr hin abzudichten und der zweite Dichtungsabschnitt dafür vorgesehen ist, zur Umhüllung hin abzudichten, wobei am ersten Dichtungsabschnitt ein Spannelement angeordnet ist, welches kontrahierbar ist, um einen Abschnitt des ersten Dichtungsabschnitts gegen die Rohraußenoberfläche des Rohrs zu drücken, und dass am zweiten Dichtungsabschnitt ein Stabilisierungselement, das als Ring oder als Ringabschnitt ausgebildet ist, angeordnet ist, das eine Pressung der zweiten Außenfläche des zweiten Dichtungsabschnitts an die Innenoberfläche der Umhüllung ermöglicht, die vorstehende beschriebene Aufgabe vollumfänglich löst, wenn vorgesehen ist, dass das Stabilisierungselement in einer Aufnahme am Dichtungskörper eingesteckt oder eingeclipst oder verrastet ist.

Durch die geschilderten Maßnahmen ist es möglich, dass die Abdichtung des ersten Dichtungsabschnitts zum Rohr hin durch das Vorsehen eines Spannelements verbessert ist, sodass insbesondere Rohre mit gewellter Oberfläche fluiddicht mithilfe des erfindungsgemäßen Dichtungselements in die Umhüllung einführbar sind.

Zum anderen ist durch das Vorsehen eines Stabilisierungselements am zweiten Dichtungsabschnitt eine verbesserte Stabilität des Dichtungselements gegen Winkelauslenkungen im Falle einer nicht senkrechten Einführung des Rohrs in die Stirnseite des Dichtungselements erreicht.

Die oben genannten Nachteile des Standes der Technik können durch das Dichtungselement der vorliegenden Erfindung behoben bzw. zumindest weitgehend reduziert werden.

Bei der vorliegenden Erfindung ist vorgesehen, dass das Stabilisierungselement als Ring oder als Ringabschnitt ausgebildet ist.

Durch diese Maßnahme kann ein besonders stabiler und sicherer Sitz des Dichtungselements an der Umhüllung sichergestellt werden, wodurch dort eine besonders hohe Dichtwirkung resultiert.

Im Rahmen der vorliegenden Erfindung kann vorgesehen sein, dass der Werkstoff des Stabilisierungselements einen höheren E-Modul aufweist als der Werkstoff des Dichtungskörpers. Durch den höheren E-Modul des Werkstoffs des Stabilisierungselements gegenüber dem Werkstoff des Dichtungskörpers ist der Sitz des Dichtungselements im Bereich der Umhüllung verbessert.

Gemäß vorliegender Erfindung ist vorgesehen, dass das Stabilisierungselement in einer Aufnahme am Dichtungskörper eingeclipst oder verrastet ist.

Durch die vorstehend bezeichnete Maßnahme kann das Stabilisierungselement je nach den technischen Notwendigkeiten am Dichtungskörper angeordnet sein, wobei durch diese Maßnahme insbesondere auch unterschiedliche Stabilisierungsgrade erzielbar sind.

Mit großem Vorteil kann im Rahmen der vorliegenden Erfindung der Werkstoff des Dichtungskörpers ausgewählt sein aus der Gruppe elastomerer Werkstoffe, umfassend beispielsweise Ethylen-Propylen-Dien-Kautschuk (EPDM), Ethylen-Propylen-Copolymer-Kautschuk (EPM), Fluor-Polymer-Kautschuk (FKM, FPM), Perfluorierter Kautschuk (FFKM, FFPM), Fluor-Silikon-Kautschuk (FVMQ), Isopren-Kautschuk (IR), Butyl-Kautschuk (IIR), Butadien-Kautschuk (BR), Nitril-Kautschuk (NBR), Chloropren-Kautschuk (CR), Gummi (NR), Silikon-Kautschuk, Thermoplastische Elastomere, Polyurethan (PU), Thermoplastisches Polyurethan (TPU), sowie Mischungen der Vorgenannten.

Die vorgenannten Polymermaterialien weisen alle elastomere Eigenschaften auf.

Durch die Auswahl des Werkstoffs gemäß vorliegender Liste für den Dichtungskörper kann dieser nach den technischen Vorgaben hinsichtlich Flexibilität, Härte, Inertheit und weiteren mechanischen, chemischen und physikalischen Faktoren bereitgestellt werden.

Im Rahmen der vorliegenden Erfindung kann es sich auch als günstig erweisen, wenn vorgesehen ist, dass der Dichtungskörper abschnittsweise aus verschiedenen Werkstoffen besteht oder solche enthält. So kann es beispielsweise vorteilhaft sein, wenn die Abschnitte des Dichtungskörpers, die dichtend wirken, aus einem Werkstoff mit einem geringeren E-Modul gewählt werden, als die Abschnitte des Dichtungskörpers, die nicht dichtend wirken, sondern quasi die stabilisierende und tragende Funktion erfüllen. Auf diese Weise kann im Bereich der dichtend wirkenden Abschnitte eine besonders hohe Fluiddichtheit erzielt werden. Auch können durch diese Maßnahme die Kosten für einen solchen Dichtungskörpers gesenkt werden.

Es kann sich bei der vorliegenden Erfindung als sehr günstig erweisen, wenn vorgesehen ist, dass der Werkstoff des Stabilisierungselements ausgewählt ist aus der Gruppe umfassend Thermoplaste, bevorzugt Polyolefine, wie Polyethylen, Polypropylen und Polybutylen, Polyamide, Polyester, ABS (Acrylnitril-Butadien-Styrol), Polystyrol, Polycarbonat, Polyvinylchlorid, Polyoxymethylen (POM), und deren Mischungen, Blends und Copolymere. Durch die Auswahl des Werkstoffs für das Stabilisierungselement aus der vorgenannten Gruppe kann dieses im Hinblick auf seine Härte, Biegebelastbarkeit, Flexibilität, Inertheit und Langlebigkeit je nach den herrschenden Anforderungen bestimmt werden.

Derartige Polymermaterialien sind langlebig, inert, stabil, weisen ein geringes Gewicht auf, sind einfach handhabbar, leicht installierbar und können kostengünstig bereitgestellt werden.

Insbesondere ist es mit diesen Polymermaterialien sehr einfach, durch verschiedene Formgebungsverfahren ein Stabilisierungselement in der gewünschten Ausführung herzustellen.

Der Dichtungskörper und / oder das Stabilisierungselement können in einem Formgebungsverfahren, zum Beispiel in einem Extrusionsverfahren oder einem Spritzgussverfahren oder einem Thermoformverfahren oder einem Blasverfahren oder einer Kombination der vorgenannten Verfahren hergestellt sein.

Alternativ ist es auch möglich, dass der Dichtungskörper und / oder das Stabilisierungselement unter Verwendung eines generativen Fertigungsverfahrens, insbesondere einstückig, beispielsweise durch ein 3-D-Druckverfahren, hergestellt sind bzw. ist.

Hierzu kann mit Vorteil ein datenverarbeitungsmaschinenlesbares dreidimensionales Modell für die Herstellung genutzt werden.

Diese Offenbarung umfasst auch ein Verfahren zur Erzeugung eines datenverarbeitungsmaschinenlesbaren dreidimensionalen Modells zur Verwendung in einem Herstellungsverfahren für einen Dichtungskörper und / oder ein Stabilisierungselement. Hierbei umfasst das Verfahren insbesondere auch die Eingabe von Daten, die einen Dichtungskörper und / oder ein Stabilisierungselement darstellen, in eine Datenverarbeitungsmaschine und die Nutzung der Daten, um einen Dichtungskörper und / oder ein Stabilisierungselement als dreidimensionales Modell darzustellen, wobei das dreidimensionale Modell geeignet ist zur Nutzung bei der Herstellung eines Dichtungskörpers und / oder eines Stabilisierungselements. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Dichtungskörper und / oder ein Stabilisierungselement abgegeben wird und die reflektierte Energie empfangen wird, und wobei ein virtuelles dreidimensionales Modell eines Dichtungskörpers und / oder eines Stabilisierungselements unter Verwendung einer computer-unterstützten Design-Software erzeugt wird.

Bei dem erfindungsgemäßen Dichtungselement ist ein Spannelement vorgesehen, welches in einer vorteilhaften Weise als endliches Band und / oder als endlicher Streifen ausgebildet ist.

In bevorzugter Weise ist an dem endlichen Band und / oder dem endlichen Streifen an einem Ende eine Spann- und / oder Fixiereinrichtung ausgebildet. Durch die Ausbildung einer Spann- und / oder Fixiereinrichtung an einem Ende des Spannelements ist es in einfacher Weise möglich, das Spannelement in einen gespannten Zustand zu versetzen und diesen Zustand aufrechtzuerhalten, wenn ein Rohr durch das Dichtungselement in die Umhüllung eingeführt ist. Das Spannelement kann zu diesem Zweck um den ersten Dichtungsabschnitt ganz oder zumindest zu einem Teil herum gelegt sein und kann beispielsweise auch an der Oberfläche des ersten Dichtungsabschnitts festgelegt sein oder an der Oberfläche des ersten Dichtungsabschnitts geführt sein.

Auf diese Weise ist eine fluiddichte Einführung des Rohres mithilfe des erfindungsgemäßen Dichtungselements in die Umhüllung sichergestellt.

Insbesondere wenn Rohre mit einer gewellten Oberfläche, bei der Einschnürungen vorliegen, mithilfe des Dichtungselements in die Umhüllung eingeführt sind, kann auf diese Weise eine Fluiddichtheit in einfacher und sicherer Weise hergestellt werden.

Da die Rohre durch das Aufwickeln auf Haspeln für die Lagerung und den Transport oftmals eine gewisse Ovalität aufweisen, die bis zu 5 % bezogen auf die Durchmesserunterschiede betragen kann, sind durch die vorstehend geschilderte Maßnahme auch solche Rohre fluiddicht mithilfe des erfindungsgemäßen Dichtungselements in die Umhüllung einführbar.

Das Dichtungselement der vorliegenden Erfindung kann in einer weiteren Ausgestaltung sehr vorteilhaft ausgebildet sein, wenn vorgesehen ist, dass an wenigstens einem Dichtungsabschnitt wenigstens eine Dichtkante ausgebildet ist.

Eine solche Dichtkante an wenigstens einem Dichtungsabschnitt des erfindungsgemäßen Dichtungselements kann in Form eines hervorstehenden Abschnitts, wie beispielsweise einer Lippe oder eines Wulstes oder einer Erhebung oder eines hervorstehenden Bereiches ausgebildet sein.

Durch diese Maßnahme ist es möglich, eine besonders sichere Dichtheit zu erreichen.

Im Rahmen der vorliegenden Erfindung kann es sich als ganz besonders günstig erweisen, wenn vorgesehen ist, dass das Dichtungselement rotationssymmetrisch bzgl. einer Achse ausgebildet ist. Hierdurch kann das erfindungsgemäße Dichtungselement in einfacher Weise und kostengünstig hergestellt werden, weiterhin kann die Anwendung des Dichtungselements auf diese Weise vereinfacht werden, da keine Positionierungen bei der Installation des Dichtungselements in Bezug auf das Rohr und die Umhüllung zu beachten sind.

Die Aufgabe der vorliegenden Erfindung, ein Rohrsystem anzugeben, erfährt ihre Lösung mit den Merkmalen des Anspruchs 8.

Im Rahmen der vorliegenden Erfindung wurde erkannt, dass ein Rohrsystem dann besonders vorteilhaft ausgebildet ist, wenn vorgesehen ist, dass dieses wenigstens ein Rohr und wenigstens eine Umhüllung umfasst, wobei das wenigstens eine Rohr mit dem Dichtungselement - wie vorstehend beschrieben - fluiddicht in die Umhüllung eingeführt ist.

Bei dem erfindungsgemäßen Rohrsystem können insbesondere auch Rohre mit einer gewellten Außenoberfläche, Rohre mit einem ovalen Querschnitt, und Rohre, die nicht exakt senkrecht in Bezug auf die Stirnseite an der Öffnung der Umhüllung bzw. auf die Stirnseite des Dichtungselements ausgerichtet sind, oder Rohre, die exzentrisch bezüglicher der Achse der Umhüllung in die Stirnseite der Umhüllung eingeführt sind, in fluiddichter Weise in die Umhüllung eingeführt sein. Auch Rohre mit einer gewissen Toleranz im Außendurchmesser lassen sich so sicher abdichten, da der Werkstoff des Dichtungselements elastomere Eigenschaften aufweist und die Toleranzen im Durchmesser ausgleichen kann.

Ein derartiges Rohrsystem kann sehr vorteilhaft montiert und betrieben werden, weil durch das erfindungsgemäße Dichtungselement verhindert wird, dass in unerwünschter Weise Polymerschaum bei dessen Einbringen nach außen gelangt bzw. Fluid aus dem umgebenden Erdboden in das Innere der Umhüllung eindringen kann.

Die Installation des erfindungsgemäßen Dichtungselements geschieht folgendermaßen: Das Rohr wird an dem Ende, das in die Umhüllung einzuführen ist zunächst ein Stück weit von der Wärmedämmschicht und der Außenschicht befreit, indem diese beispielsweise abgeschnitten, abgeschlagen, abgebrochen oder abgefräst werden.

Das Ende des frei liegenden Medienrohres wird dann durch die Öffnung des Dichtungselements geschoben.

Abschließend ist nach Installation des Bogens oder Abzweigs oder der Rohrverbindung am Medienrohr die Umhüllung, die zweischalig ausgeführt sein kann, anzubringen, wobei das Dichtungselement an einem Ende der Umhüllung am dort vorgesehenen Sitz zu positionieren ist.

Das am ersten Dichtungsabschnitt angeordnete Spannelement wird dann in einen gespannten Zustand versetzt, so dass dadurch das Rohr fluiddicht in das Dichtungselement eingeführt ist.

In den Raum im Innern der Umhüllung kann ein expandierender Polymerschaum eingebracht werden, der die Wärmedämmung in diesem Bereich wieder her- und sicherstellt. Beim Expandieren drückt der Polymerschaum die Rohrdichtlippe an die Außenoberfläche des Rohres und sorgt so zusätzlich für eine hohe Fluiddichtheit an dieser Stelle.

Weitere wichtige Merkmale und Vorteile der Erfindung ergeben sich aus den Unteransprüchen, aus den Figuren und aus der zugehörigen Figurenbeschreibung.

Bevorzugte Ausführungsbeispiele der Erfindung sind in den Fig. dargestellt und werden in der nachfolgenden Beschreibung näher erläutert.

Hierzu zeigt:
- Fig. 1: eine schematische seitliche Querschnittsansicht eines ersten Ausführungsbeispiels eines Dichtungselements;
- Fig. 2: eine schematische seitliche Querschnittsansicht eines Rohrsystems, bei dem ein Rohr mit einem Dichtungselement fluiddicht in eine Umhüllung eingeführt ist;
- Fig. 3: eine schematische perspektivische Ansicht eines zweiten Ausführungsbeispiels eines Dichtungselements.

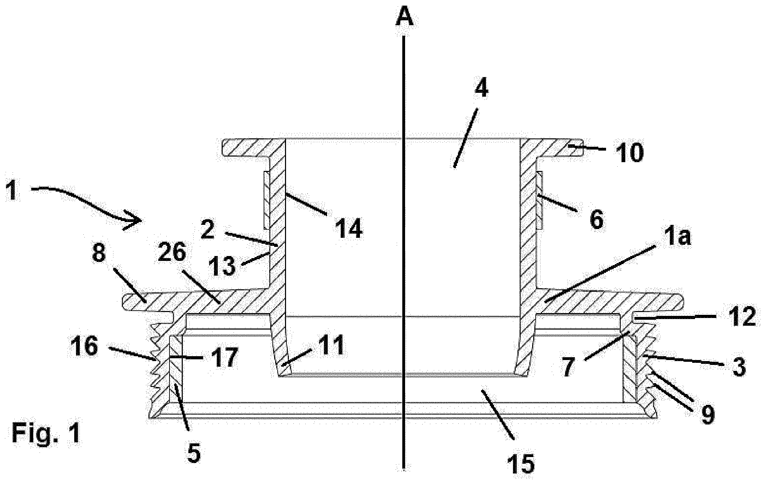

In Fig. 1 ist ein einer seitlichen schematischen Querschnittsansicht ein erfindungsgemäßes Dichtungselement 1 in einer ersten Ausführungsart gezeigt.

Das Dichtungselement 1 ist bzgl. einer Achse A rotationssymmetrisch ausgebildet. Es weist einen Dichtungskörper 1a auf mit einer Öffnung 4. Es ist ein erster Dichtungsabschnitt 2 ausgebildet, der etwa die Form einer Zylindermantelfläche aufweist. An einem Ende des ersten Dichtungsabschnitts 2 ist ein Endkragen 10 vorgesehen, der etwa senkrecht von der Zylindermantelfläche des ersten Dichtungsabschnitts 2 radial nach außen vorsteht.

An der ersten Außenfläche 13 des ersten Dichtungsabschnitts 2 ist ein Spannelement 6 vorgesehen. Mithilfe des Spannelements 6 an der ersten Außenfläche 13 des ersten Dichtungsabschnitts 2 des Dichtungselements 1 kann der erste Dichtungsabschnitt 2 in einem Abschnitt komprimiert werden.

Am Dichtungselement 1 ist eine Öffnung 4 ausgebildet, die das Dichtungselement 1 komplett durchsetzt. Der erste Dichtungsabschnitt 2 des Dichtungselements 1 ist dafür vorgesehen, ein hier nicht gezeigtes Rohr aufzunehmen. Das vom ersten Dichtungsabschnitt 2 aufzunehmende Rohr weist dabei etwa einen Außendurchmesser auf, der der lichten Weite der Öffnung 4 im Bereich des ersten Dichtungsabschnitts 2 entspricht.

An dem Endkragen 10 gegenüberliegenden Ende des ersten Dichtungsabschnitts 2 des Dichtungselements 1 ist ein Vorsprung 8 ausgebildet, der etwa senkrecht von der ersten Außenfläche 13 des ersten Dichtungsabschnitts 2 radial vorsteht.

An dem dem Endkragen 10 entgegengesetzten Ende des ersten Dichtungsabschnitts 2 ist eine Rohrdichtlippe 11 angeordnet, die in ihrem Endbereich konisch sich verjüngend zuläuft.

Am erfindungsgemäßen Dichtungselement 1 ist weiterhin ein zweiter Dichtungsabschnitt 3 angeordnet, der sich unmittelbar am Vorsprung 8 erstreckt. Direkt zugeordnet zum Vorsprung 8 ist eine Nut 12 am zweiten Dichtungsabschnitt 3 ausgebildet.

Die zweite Außenfläche 16 am zweiten Dichtungsabschnitt 2 des Dichtungselements 1 weist Dichtkanten 9 auf, die vorliegend von der zweiten Außenfläche 16 hervorstehend ausgebildet sind. An der zweiten Innenfläche 17 des zweiten Dichtungsabschnitts 3 ist ein Anschlag 7 ausgebildet, der unmittelbar neben der Nut 12 angeordnet ist.

Ein Stabilisierungselement 5 ist an der zweiten Innenfläche 17 im Bereich des zweiten Dichtungsabschnitts 3 derartig angeordnet, dass dieses sich bis zum Anschlag 7 erstreckt.

Die lichte Weite im Bereich des zweiten Dichtungsabschnitts 3 des Dichtungselements 1 ist dabei größer, als die lichte Weite im Bereich des ersten Dichtungsabschnitts 2 des Dichtungselements 1.

In einer anderen hier nicht gezeigten Ausführungsform der vorliegenden Erfindung kann auch vorgesehen sein, dass die lichte Weite im Bereich des zweiten Dichtungsabschnitts 3 des Dichtungselements 1 kleiner ist, als die lichte Weite im Bereich des ersten Dichtungsabschnitts 2 des Dichtungselements 1.

Der Radialabschnitt 26 des Dichtungselements 1 erstreckt sich zwischen dem ersten Dichtungsabschnitts 2 und dem zweiten Dichtungsabschnitt 3.

Ein Innenraum 15 ist im Bereich des zweiten Dichtungsabschnitts 3 ausgebildet, der zumindest abschnittsweise von der zweiten Innenfläche 17 bzw. der Innenoberfläche des Stabilisierungselements 5 begrenzt wird.

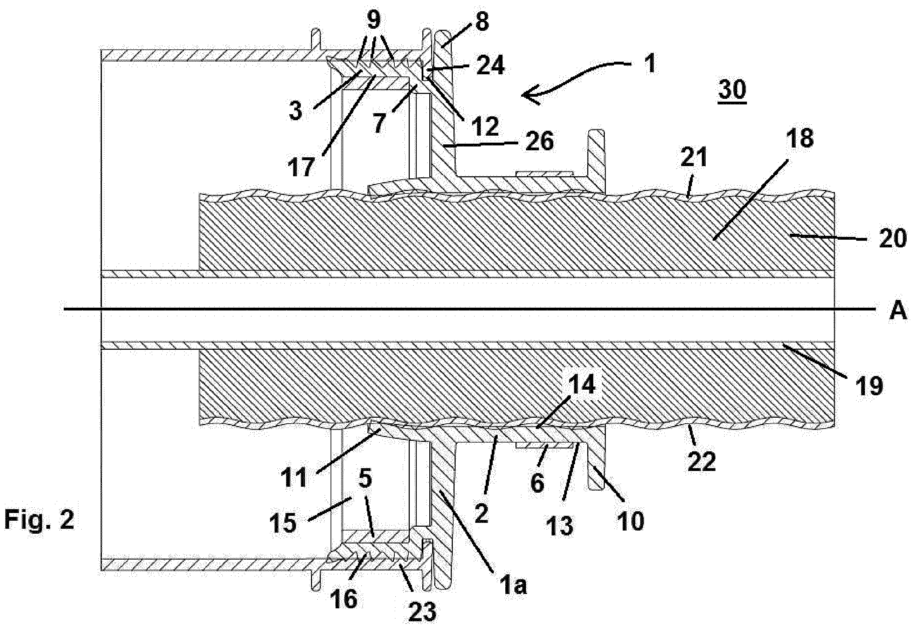

In Fig. 2 ist in einer seitlichen schematischen Querschnittsansicht ein Rohrsystem 26 gezeigt.

Das Rohrsystem 26 umfasst ein Rohr 18, ein Dichtungselement 1 und eine Umhüllung 23. Bei dem Rohrsystem 26 ist das Rohr 18 mit dem Dichtungselement 1 fluiddicht in die Umhüllung 23 eingeführt.

Die Bezugszeichen für das Dichtungselement 1 entsprechen denen aus Fig. 1.

Das Rohr 18 umfasst ein Medienrohr 19, in dem beispielsweise eine erwärmte Flüssigkeit strömt. An der Außenoberfläche des Medienrohrs 19 ist eine Wärmedämmschicht 20 angebracht, die beispielsweise in Form eines geschäumten Polymermaterials ausgebildet ist.

Auf der Außenoberfläche der Wärmedämmschicht 20 ist eine Außenschicht 21 aufgebracht, die dazu dient, das Rohr 18 gegen mechanische Beschädigungen zu schützen. Die Rohraußenoberfläche 22 des Rohres 18 ist gewellt ausgeführt, wobei an der Rohraußenoberfläche 22 Einschnürungen und Erhebungen in regelmäßiger Reihenfolge etwa gleichbeabstandet angeordnet sind.

Das Rohr 18 ist mithilfe des Dichtungselements 1 fluiddicht in die Umhüllung 23 eingeführt. Hierzu ist das Rohr 18 durch die Öffnung 4 des Dichtungselements 1 geschoben, sodass die erste Innenfläche 14 im Bereich des ersten Dichtungsabschnitts 2 des Dichtungselements 1 mit der Rohraußenoberfläche 22 in Kontakt kommt.

Die Größe der Öffnung 4 des Dichtungselements 1 bemisst sich dabei nach dem Rohraußendurchmesser des Rohres 18, das durch die Öffnung 4 zu schieben ist. Die Größe der Öffnung 4 kann dabei 0 bis 10 % kleiner sein, als der Rohraußendurchmesser des Rohres 18, wobei für gewellte Rohre 18 ein mittlerer Außendurchmesser anzusetzen ist, der das arithmetische Mittel des größten und des kleinsten Rohraußendurchmessers darstellt.

Zur Verbesserung der Dichtheit zwischen der ersten Innenfläche 14 im Bereich des ersten Dichtungsabschnitts 2 des Dichtungselements 1 und der Rohraußenoberfläche 22 des Rohres 18 ist das Spannelement 6 kontrahiert, sodass ein Abschnitt des ersten Dichtungsabschnitts 2 gegen die Rohraußenoberfläche 22 des Rohrs 18 gedrückt ist. Auf Grund der Materialwahl für den Dichtungskörper 1 a in Form eines Polymermaterials, das elastomere Eigenschaften aufweist, kann das Spannelement 6 leicht einen Abschnitt des ersten Dichtungsabschnitts 2 derart kontrahieren, dass sich die erste Innenfläche 14 an die Rohraußenoberfläche 22 des Rohres 18 anlegt und so eine erhöhte Fluiddichtheit erzeugt wird. Weiterhin ist durch diese Maßnahme sichergestellt, dass das Rohr 18 gegenüber dem Dichtungselement 1 nicht verschoben werden kann, was die Erzielung einer hohen Fluiddichtheit zusätzlich unterstützt.

Der Endkragen 10 am ersten Dichtungsabschnitt 2 des Dichtungselements 2 verhindert dabei, dass sich das Spannelement 6 in unerwünschter Weise verlagert, verrutscht, oder vom ersten Dichtungsabschnitt 2 herabgleitet. Zudem erleichtert der Endkragen 10 die Montage bzw. das Positionieren des Dichtungselements 2 auf dem Rohr 18.

Die Umhüllung 23 kann, was hier nicht im Detail gezeigt ist, aus zwei Halbschalen zusammengebaut sein. Am stirnseitigen Ende der Umhüllung 23 ist ein Überstand 24 ausgebildet. Der Überstand 24 erstreckt sich von der länglich ausgebildeten Umhüllung 23 radial ein Stück nach innen.

Im Bereich des zweiten Dichtungsabschnitts 3 des Dichtungselements 1 ist im Verbindungszustand des Rohres 18 mit der Umhüllung 23 die zweite Außenfläche 16 des zweiten Dichtungsabschnitts 3 des Dichtungselements 1 an der Innenseite der Umhüllung 23 anliegend.

Die an der zweiten Außenfläche 16 am zweiten Dichtungsabschnitt 3 des Dichtungselements 1 ausgebildeten Dichtkanten 9 pressen sich dabei an die Innenoberfläche der Umhüllung 23 an und dichten dort ab.

Der am Ende der Umhüllung 23 radial nach innen weisende Überstand 24 greift dabei in die Nut 12 am Ende des zweiten Dichtungsabschnitts 3 des Dichtungselements 1 ein und sichert dessen Position am Ende der Umhüllung 23.

Das Stabilisierungselement 5 am zweiten Dichtungsabschnitt 3 des Dichtungselements 1 stabilisiert diesen festgelegten Zustand des Dichtungselements 1 am Ende der Umhüllung 23 und ermöglicht zugleich die Pressung der zweiten Außenfläche 16 des zweiten Dichtungsabschnitts 3 an die Innenoberfläche der Umhüllung 23.

Die Größe des zweiten Dichtungsabschnitts 3 des Dichtungselements 1 bemisst sich dabei nach der Größe des Endes der Umhüllung 23, in dem das Dichtungselement 1 zu positionieren ist, mit einem gewissen Übermaß, so dass sich die Pressung des elastomeren Werkstoffs des zweiten Dichtungsabschnitts 3 des Dichtungselements 1 ergibt, und die Dichtkanten 9 unter Druck an der Innenoberfläche der Umhüllung 23 anliegen.

Wenn der Innenraum 15 mit einem Polymerschaummaterial gefüllt wird, drückt dieses von außen gegen die Rohrdichtlippe 11, die dadurch an die Rohraußenoberfläche 22 des Rohres 18 gepresst wird und für eine zusätzliche Dichtheit sorgt.

Durch die vorstehend geschilderten Maßnahmen gelingt es, ein Rohr 18 fluiddicht mithilfe eines Dichtungselements 1 in eine Umhüllung 23 einzuführen, wobei das Dichtungselement 1 geeignet ist, sowohl Rohre 18 mit einer gewellten Rohraußenoberfläche 22, wie auch ein Rohr 18, das eine gewisse Ovalität aufweist, fluiddicht in die Umhüllung 23 einzuführen.

Weiterhin ist das Dichtungselement 1 derartig fest im Eckbereich der Umhüllung 23 befestigt und angeordnet, dass auch Abwinklungen und radiale Achsversätze zwischen dem Rohr 18 und der Umhüllung 23 bis zu einem gewissen Ausmaß toleriert werden, ohne das Undichtigkeiten entstehen.

In Fig. 2 ist eine Achse A eingezeichnet, zu der das Rohr 18, das Dichtungselement 1 und zumindest ein Teil der Umhüllung rotationssymmetrisch ausgebildet ist.

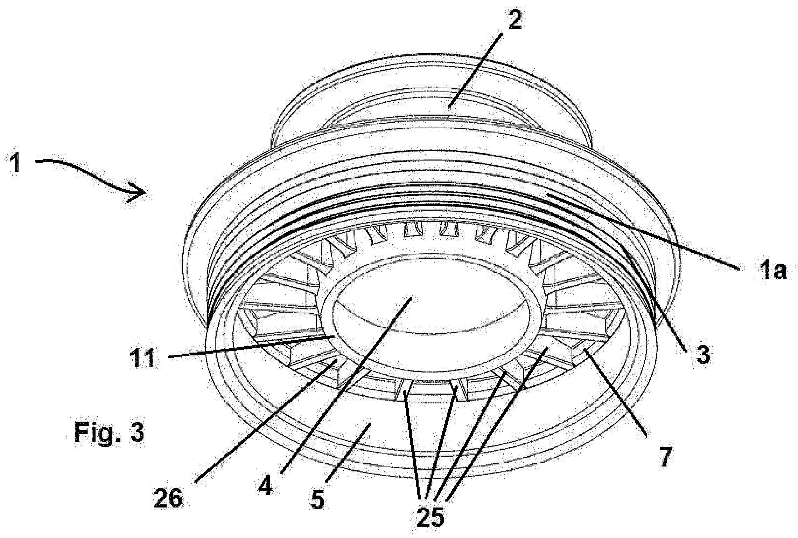

In Fig. 3 ist in einer schematischen perspektivischen Ansicht ein Dichtungselement 1 in einer zweiten Ausführungsart gezeigt. Die Bezugszeichen in Fig. 3 entsprechen denen aus Fig. 1.

Zur verbesserten Stabilisierung sind bei dem Dichtungselement 1 der zweiten Ausführungsart Rippen 25 angeordnet, die den sich radial erstreckenden Radialabschnitt 26 des Dichtungskörpers 1a versteifen.

Die Rippen 25 erstrecken sich von der Rohrdichtlippe 11 zur radial gegenüberliegenden Innenoberfläche des Anschlags 7. Die Rippen 25 sind in einer Mehrzahl angeordnet, die Anordnung ist bevorzugt so, dass der Abstand zweier benachbarter Rippen 25 jeweils gleich ist.

Durch diese Maßnahme wird einerseits die Rohrdichtlippe 11 stabilisiert, da Kräfte, die beispielsweise von einem in der Öffnung 4 angeordneten hier nicht gezeigten Rohr auf die Rohrdichtlippe 11 einwirken, von dort zum Anschlag 7 und weiter an die Umhüllung 23 abgeleitet werden.

Durch die Rippen 25 wird wirksam eine unerwünschte Aus- oder Einbeulung des Radialabschnittes 26 des Dichtungselements 1 verhindert bzw. erheblich reduziert, welche durch eine Auslenkung des Rohres 18 im Dichtungselement 1 entstehen kann. Damit werden mögliche Undichtigkeiten vermieden.

Dadurch resultiert insgesamt eine bessere axiale Stabilität, was zu einer verbesserten Dichtigkeit des Dichtungselements 1 der vorliegenden Erfindung führt.

### Bezugszeichenliste

- 1: Dichtungselement
- 1a: Dichtungskörper
- 2: erster Dichtungsabschnitt
- 3: zweiter Dichtungsabschnitt
- 4: Öffnung
- 5: Stabilisierungselement
- 6: Spannelement
- 7: Anschlag
- 8: Vorsprung
- 9: Dichtkante
- 10: Endkragen
- 11: Rohrdichtlippe
- 12: Nut
- 13: erste Außenfläche
- 14: erste Innenfläche
- 15: Innenraum
- 16: zweite Außenfläche
- 17: zweite Innenfläche
- 18: Rohr
- 19: Medienrohr
- 20: Wärmedämmschicht
- 21: Außenschicht
- 22: Rohraußenoberfläche
- 23: Umhüllung
- 24: Überstand
- 25: Rippe
- 26: Radialabschnitt
- 30: Rohrsystem
- A: Achse

## Patentansprüche

1. Dichtungselement (1) für die fluiddichte Einführung eines Rohres (18), welches ein Medienrohr (19), an dessen Außenoberfläche eine Wärmedämmschicht (20) angebracht ist, und Z auf der Außenoberfläche der Wärmedämmschicht (20) eine Außenschicht (21) aufgebracht ist, die dazu dient, das Rohr (18) gegen mechanische Beschädigungen zu schützen, umfasst, in eine Umhüllung (23), wobei das Dichtungselement (1) einen Dichtungskörper (1a) aufweist mit einer Öffnung (4), und bei welchem Dichtungselement (1) ttemein erster (2) und ein zweiter (3) Dichtungsabschnitt ausgebildet sind, wobei der erste Dichtungsabschnitt (2) eine erste Außenfläche (13) aufweist und der zweite Dichtungsabschnitt (3) eine zweite Außenfläche (16) aufweist, wobei der erste Dichtungsabschnitt (2) dafür vorgesehen ist, zum Rohr (18) hin abzudichten und der zweite Dichtungsabschnitt (3) dafür vorgesehen ist, zur Umhüllung (23) hin abzudichten, wobei an der ersten Außenfläche (13) des ersten Dichtungsabschnitts (2) ein Spannelement (6) angeordnet ist, welches kontrahierbar ist, um einen Abschnitt des ersten Dichtungsabschnitts (2) gegen die Außenschicht (21) des Rohrs (18) zu drücken, und wobei am zweiten Dichtungsabschnitt (3) ein Stabilisierungselement (5), das als Ring oder als Ringabschnitt ausgebildet ist, angeordnet ist, das eine Pressung der zweiten Außenfläche (16) des zweiten Dichtungsabschnitts (3) an die Innenoberfläche der Umhüllung (23) ermöglicht, **dadurch gekennzeichnet, dass** das Stabilisierungselement (5) in einer Aufnahme am Dichtungskörper (1a) eingeclipst oder verrastet ist.

2. Dichtungselement (1) nach Anspruch 1, **dadurch gekennzeichnet, dass** der Werkstoff des Stabilisierungselements (5) einen höheren E-Modul aufweist, als der Werkstoff des Dichtungskörpers (1a).

3. Dichtungselement (1) nach einem der vorangehenden Ansprüche, **dadurch gekennzeichnet, dass** der Werkstoff des Dichtungskörpers (1a) ausgewählt ist aus der Gruppe elastomerer Werkstoffe, umfassend Ethylen-Propylen-Dien-Kautschuk (EPDM), Ethylen-Propylen-Copolymer-Kautschuk (EPM), Fluor-Polymer-Kautschuk (FKM, FPM), Perfluorierter Kautschuk (FFKM, FFPM), Fluor-Silikon-Kautschuk (FVMQ), Isopren-Kautschuk (IR), Butyl-Kautschuk (IIR), Butadien-Kautschuk (BR), Nitril-Kautschuk (NBR), Chloropren-Kautschuk (CR), Gummi (NR), Silikon-Kautschuk, Thermoplastische Elastomere, Polyurethan (PU), Thermoplastisches Polyurethan (TPU), sowie Mischungen der Vorgenannten.

4. Dichtungselement (1) nach einem der vorangehenden Ansprüche, **dadurch gekennzeichnet, dass** der Werkstoff des Stabilisierungselements (5) ausgewählt ist aus der Gruppe, umfassend Thermoplaste, bevorzugt Polyolefine, wie Polyethylen, Polypropylen und Polybutylen, Polyamide, Polyester, ABS (Acrylnitril-Butadien-Styrol), Polystyrol, Polycarbonat, Polyvinylchlorid, Polyoxymethylen (POM), und deren Mischungen, Blends und Copolymere, und / oder der Gruppe der Metall, umfassend Eisen, Stahl, Aluminium, Messing, Kupfer, Zink, und deren Mischungen und Legierungen, und / oder der Gruppe der Duromere, wie beispielsweise einem Epoxidharz.

5. Dichtungselement (1) nach einem der vorangehenden Ansprüche, **dadurch gekennzeichnet, dass** das Spannelement (6) ein endliches Band und / oder ein endlicher Streifen ist, das bevorzugt an einem Ende eine Spann- und / oder Fixiereinrichtung aufweist.

6. Dichtungselement (1) nach einem der vorangehenden Ansprüche, **dadurch gekennzeichnet, dass** an wenigstens einem Dichtungsabschnitt (2, 3) wenigstens eine Dichtkante (9) und / oder Dichtlippe ausgebildet ist.

7. Dichtungselement (1) nach einem der vorangehenden Ansprüche, **dadurch gekennzeichnet, dass** dieses rotationssymmetrisch bezüglich einer Achse A ausgebildet ist.

8. Rohrsystem (30), umfassend wenigstens ein Rohr (18), welches ein Medienrohr (19), an dessen Außenoberfläche eine Wärmedämmschicht (20) angebracht ist, und an der Außenoberfläche der Wärmedämmschicht (2) eine Außenschicht (21) aufgebracht ist, die dazu dient, das Rohr (18) gegen mechanische Beschädigungen zu schützen, umfasst, und wenigstens eine Umhüllung (23), wobei das wenigstens eine Rohr (18) mit dem Dichtungselement (1) nach einem der Ansprüche 1 bis 7 fluiddicht in die Umhüllung (23) eingeführt ist.

## Claims

1. Seal element (1) for the fluid-tight introduction of a pipe (18), which comprises a media pipe (19), to the outer surface of which a heat-insulating layer (20) is applied, and an outer layer (21) serving to protect the pipe (18) against mechanical damage being applied to the outer surface of the heat-insulating layer (20), into a sheath (23), wherein the seal element (1) has a seal body (1a) with an opening (4), and in which seal element (1) a first (2) and a second (3) seal portion are formed, the first seal portion (2) having a first outer face (13) and the second seal portion (3) having a second outer face (16), wherein the first seal portion (2) is designed to seal with respect to the pipe (18) and the second seal portion (3) is designed to seal with respect to the sheath (23), wherein a clamping element (6) is arranged on the first outer face (13) of the first seal portion (2) and can contract in order to push a portion of the first seal portion (2) against the outer layer (21) of the pipe (18), and wherein a stabilising element (5), in the form of a ring or a ring portion, is arranged on the second seal portion (3) and enables the second outer face (16) of the second seal portion (3) to be pressed against the inner surface of the sheath (23), **characterised in that** the stabilising element (5) is clipped or latched in a recess on the seal body (1a).

2. Seal element (1) according to claim 1, **characterised in that** the material of the stabilising element (5) has a higher modulus of elasticity than the material of the seal body (1a).

3. Seal element (1) according to one of the preceding claims, **characterised in that** the material of the seal body (1a) is selected from the group of elastomeric materials, comprising ethylene-propylene-diene rubber (EPDM), ethylene-propylene copolymer rubber (EPM), fluoropolymer rubber (FKM, FPM), perfluorinated rubber (FFKM, FFPM), fluorosilicone rubber (FVMQ), isoprene rubber (IR), butyl rubber (IIR), butadiene rubber (BR), nitrile rubber (NBR), chloroprene rubber (CR), rubber (NR), silicone rubber, thermoplastic elastomers, polyurethane (PU), thermoplastic polyurethane (TPU), and mixtures of the above.

4. Seal element (1) according to one of the preceding claims, **characterised in that** the material of the stabilising element (5) is selected from the group comprising thermoplastic materials, preferably polyolefins, such as polyethylene, polypropylene and polybutylene, polyamides, polyesters, ABS (acrylonitrile-butadiene-styrene), polystyrene, polycarbonate, polyvinyl chloride, polyoxymethylene (POM), and mixtures, blends and copolymers thereof, and/or the group of metals, comprising iron, steel, aluminium, brass, copper, zinc, and mixtures and alloys thereof, and/or the group of thermoset materials, such as an epoxy resin for example.

5. Seal element (1) according to one of the preceding claims, **characterised in that** the clamping element (6) is a finite band and/or a finite strip which preferably has a clamping and/or fixing device at one end.

6. Seal element (1) according to one of the preceding claims, **characterised in that** at least one sealing edge (9) and/or sealing lip is formed on at least one seal portion (2, 3).

7. Seal element (1) according to one of the preceding claims, **characterised in that** it is rotationally symmetric with respect to an axis A.

8. Pipe system (30) comprising at least one pipe (18), which comprises a media pipe (19), to the outer surface of which a heat-insulating layer (20) is applied, and an outer layer (21) serving to protect the pipe (18) against mechanical damage being applied to the outer surface of the heat-insulating layer (2), and at least one sheath (23), wherein the at least one pipe (18) is introduced into the sheath (23) in a fluid-tight manner with the seal element (1) according to one of claims 1 to 7.

## Revendications

1. Elément d'étanchéité (1) pour l'introduction de manière étanche aux fluides dans une gaine (23) d'un tuyau (18), lequel comprend un tuyau pour fluides (19), sur la surface extérieure duquel une couche thermo-isolante (20) est installée, une couche extérieure (21) étant appliquée sur la surface extérieure de la couche thermo-isolante (20) qui sert à protéger le tuyau (18) contre tout endommagement mécanique, dans lequel l'élément d'étanchéité (1) présente un corps d'étanchéité (1a) avec une ouverture (4) et dans lequel élément d'étanchéité (1) sont réalisées une première (2) et une deuxième (3) section d'étanchéité, dans lequel la première section d'étanchéité (2) présente une première face extérieure (13) et la deuxième section d'étanchéité (3) présente une deuxième face extérieure (16), dans lequel la première section d'étanchéité (2) est prévue pour réaliser l'étanchéification par rapport au tuyau (18) et la deuxième section d'étanchéité (3) est prévue pour réaliser l'étanchéification par rapport à la gaine (23), dans lequel est disposé sur la première face extérieure (13) de la première section d'étanchéité (2) un élément de serrage (6), lequel peut être contracté pour pousser une section de la première section d'étanchéité (2) contre la couche extérieure (21) du tuyau (18), et dans lequel est disposé sur la deuxième section d'étanchéité (3) un élément de stabilisation (5), qui est réalisé en tant qu'anneau ou en tant que section annulaire, qui permet de presser la deuxième face extérieure (16) de la deuxième section d'étanchéité (3) sur la surface intérieure de la gaine (23), **caractérisé en ce que** l'élément de stabilisation (5) est clipsé ou enclenché dans un logement sur le corps d'étanchéité (1a).

2. Elément d'étanchéité (1) selon la revendication 1, **caractérisé en ce que** le matériau de l'élément de stabilisation (5) présente un module d'élasticité plus élevé que le matériau du corps d'étanchéité (1a).

3. Elément d'étanchéité (1) selon l'une quelconque des revendications précédentes, **caractérisé en ce que** le matériau du corps d'étanchéité (1a) est choisi parmi le groupe de matériaux élastomères comprenant le caoutchouc d'éthylène-propylène-diène (EPDM), le caoutchouc à base de copolymère éthylène-propylène (EPM), le caoutchouc à base de polymère et de fluor (FKM, FPM), le caoutchouc perfluoré (FFKM, FFPM), le caoutchouc à base de fluorosilicone (FVMQ), le caoutchouc isoprène (IR), le caoutchouc butyle (IIR), le caoutchouc butadiène (BR), le caoutchouc nitrile (NBR), le caoutchouc chloroprène (CR), la gomme (NR), le caoutchouc silicone, les élastomères thermoplastiques, le polyuréthane (PU), le polyuréthane thermoplastique (TPU), ainsi que les mélanges des éléments susmentionnés.

4. Elément d'étanchéité (1) selon l'une quelconque des revendications précédentes, **caractérisé en ce que** le matériau de l'élément de stabilisation (5) est choisi parmi le groupe comprenant des matières thermoplastiques, de manière préférée des polyoléfines, comme le polyéthylène, le polypropylène et le polybutylène, les polyamides, le polyester, l'ABS (acrylonitrile butadiène styrène), le polystyrène, le polycarbonate, le polychlorure de vinyle, le polyoxyméthylène (POM), et leurs mélanges et copolymères, et/ou parmi le groupe des métaux, comprenant le fer, l'acier, l'aluminium, le laiton, le cuivre, le zinc et leurs mélanges et alliages, et/ou parmi le groupe des matières thermodurcissables, comme une résine époxy.

5. Elément d'étanchéité (1) selon l'une quelconque des revendications précédentes, **caractérisé en ce que** l'élément de serrage (6) est une bande limitée et/ou un ruban limité, qui présente de manière préférée sur une extrémité un dispositif de serrage et/ou de blocage.

6. Elément d'étanchéité (1) selon l'une quelconque des revendications précédentes, **caractérisé en ce qu'**au moins une arête étanche (9) et/ou une lèvre étanche sont réalisées sur au moins une section d'étanchéité (2, 3).

7. Elément d'étanchéité (1) selon l'une quelconque des revendications précédentes, **caractérisé en ce que** celui-ci est réalisé de manière symétrique en rotation par rapport à un axe A.

8. Système de tuyaux (30), comprenant au moins un tuyau (18), lequel comprend un tuyau pour fluides (19), sur la surface extérieure duquel une couche thermo-isolante (20) est installée, une couche extérieure (21) étant appliquée sur la surface extérieure de la couche thermo-isolante (2), qui sert à protéger le tuyau (18) contre tout endommagement mécanique, et au moins une gaine (23), dans lequel l'au moins un tuyau (18) est introduit de manière étanche aux fluides dans la gaine (23) avec l'élément d'étanchéité (1) selon l'une quelconque des revendications 1 à 7.
